# EUROPEAN PATENT APPLICATION

(11) **EP 4 541 680 A1**
(43) Date of publication of application: **23.04.2025**
(21) Application number: 23204373.7
(22) Date of filing: 18.10.2023
(51) Int. Cl.: B60W 50/023, B60W 50/02

(54) **MOTION ESTIMATION OF A VEHICLE**

(71) Applicant: VOLVO TRUCK CORPORATION, 405 08 Göteborg (SE)
(72) Inventor: ARIKERE, Adithya, 422 50 Göteborg (SE); JONASSON, Mats, 433 49 Partille (SE); LAINE, Leo, 414 84 Göteborg (SE); HENDERSON, Leon, 438 92 Härryda (SE); KARSTRÖM, Jonas, 412 54 Göteborg (SE)
(74) Representative: Valea AB

(57) **Abstract**

A computer system (600) comprising processing circuitry (602) configured to determine vehicle motion information of a vehicle (1) is provided. The processing circuitry (602) is configured to receive first sensor data and second sensor data for estimating vehicle motion with respect to one or more common reference entities. The first sensor data comprises sensor data of a first type. The second sensor data comprises sensor data of a second type. The first type differs from the second type. The processing circuitry (602) is configured to determine a first quality metric associated with the first sensor data. The processing circuitry (602) is configured to determine whether to use the first sensor data, the second sensor data, or a combination thereof as a basis for determining said vehicle motion information based on the first quality metric associated with the first sensor data.

## Description

### TECHNICAL FIELD

The disclosure relates generally to vehicle motion management. In particular aspects, the disclosure relates to motion estimation of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Centralized motion estimation is a key component of vehicle motion management and is an enabler for functions such as motion prediction, wheel slip control, understeer and rollover prevention, stability or safety procedures, and automated driving. However, current motion estimation may occasionally be inaccurate due to sensor failures and inaccurate sensor readings.

Hence, there is a strive to improve motion estimation of vehicles.

### SUMMARY

According to a first aspect of the disclosure, a computer system comprising processing circuitry configured to determine vehicle motion information of a vehicle is provided. The processing circuitry is configured to receive first sensor data from a first set of sensors comprised in the vehicle. The processing circuitry is configured to receive second sensor data from a second set of sensors comprised in the vehicle. The first sensor data and the second sensor data respectively comprises sensor data for estimating vehicle motion with respect to one or more common reference entities. As an example, the one or more common reference entities may comprise one or more subsystems of the vehicle or one or more objects of the vehicle, such as one or more wheels/tires of the vehicle and/or one or more parts of a vehicle body. The first sensor data comprises sensor data of a first type. The second sensor data comprises sensor data of a second type. The first type differs from the second type. The processing circuitry is configured to determine a first quality metric associated with the first sensor data. The processing circuitry is configured to, based on the first quality metric associated with the first sensor data, determine whether to use the first sensor data, the second sensor data, or a combination thereof as a basis for determining said vehicle motion information.

The first aspect of the disclosure may seek to solve a problem associated with inaccurate and/or unavailable vehicle motion estimation due to low quality sensor data, e.g., due to sensor failures and/or inaccuracies in sensors used for the vehicle motion estimation.

A technical benefit may include reliable and accurate vehicle motion estimation. This is since it is determined whether to use the first sensor data, the second sensor data, or a combination thereof as a basis for determining vehicle motion information based on the first quality metric associated with the first sensor data. This means that when the first quality metric indicates that there is a quality problem with first sensor data and/or the first set of sensors, e.g., due to a sensor failure, the second sensor data or a combination of the first and second sensor data may be used as a basis for determining said vehicle motion information. Furthermore, since the first type differs from the second type, the first set of sensors and the second set of sensors are different, and thereby they will not have a common cause of failure. This means that reliability is improved as if the first set of sensors fails, the second set of sensors is likely still operating with appropriate accuracy.

Optionally in some examples, including in at least one preferred example, the processing circuitry is configured to use the second sensor data or a combination of the second sensor data and the first sensor data as a basis for determining said vehicle motion information in response to the first quality metric being outside a predetermined reference range of the first quality metric, preferably in response to the first quality metric being below a first threshold.

A technical benefit may include improved vehicle motion estimation, this is since when the first quality metric is outside the predetermined reference range of the first quality metric, the quality of the first sensor data may be low and the second sensor data can instead be used.

Optionally in some examples, including in at least one preferred example, the processing circuitry is configured to determine a second quality metric associated with the second sensor data, and use the first sensor data, the second sensor data, or a combination thereof as a basis for determining vehicle motion information, further based on the second quality metric.

A technical benefit may include improved vehicle motion estimation, this is since the most suitable sensor data, i.e., the sensor data with the highest quality, or combination thereof may be determined based on the first quality metric and the second quality metric.

Optionally in some examples, including in at least one preferred example, the processing circuitry is configured to use the first sensor data or the second sensor data as a basis for determining vehicle motion information, based on a comparison of the first quality metric with the second quality metric.

A technical benefit may include improved vehicle motion estimation, this is since the respective sensor data with the highest quality metric may be determined to be used as a basis for determining vehicle motion information.

Optionally in some examples, including in at least one preferred example, the processing circuitry is configured to, based on the first quality metric and the second quality metric, detect that the first sensor data and the second sensor data is unsuitable for use as a basis for determining vehicle motion information, and in response to said detection, trigger the vehicle to enter a safe state. As used herein, the term "safe state" may relate to a state of the vehicle in which any operation and/or mode in utilizing the vehicle motion information is inactivated and/or a state of the vehicle in which the speed of the vehicle is prevented from exceeding a predetermined safe state speed threshold. As a non-limiting example, the "safe state" may relate to a state of the vehicle in which a controlled stop of the vehicle is initiated.

A technical benefit may include improved vehicle motion management, this is since when the first and second sensors data is unsuitable for use as a basis for determining the vehicle motion information, there is no way to determine accurate vehicle motion information in a reliable manner, and hence the vehicle may need to be set into a safe state.

Optionally in some examples, including in at least one preferred example, the first quality metric comprises a first accuracy of the first sensor data.

A technical benefit may include improved vehicle motion estimation, this is since it may be determined whether to use the first sensor data, the second sensor data, or a combination thereof as a basis for determining said vehicle motion information based on an accuracy of the first sensor data.

Optionally in some examples, including in at least one preferred example, the first quality metric comprises a first irregularity associated with the first set of sensors.

A technical benefit may include improved vehicle motion estimation, this is since it may be determined whether to use the first sensor data, the second sensor data, or a combination thereof as a basis for determining said vehicle motion information based on an irregularity of the first sensor data.

Optionally in some examples, including in at least one preferred example, the processing circuitry is configured to detect the first irregularity by being configured to detect any one or more of:
- a sensor fault of one or more sensors of the first set of sensors,
- an absence of expected sensor data of the first sensor data,
- that the first sensor data comprises sensor data indicative of values outside an operational driving domain of the vehicle, and
- that the first sensor data comprises sensor data indicative of at least two measurements obtained during a time period, and wherein a rate of change of the at least two measurements for the time period is above a rate threshold.

A technical benefit may include improved vehicle motion estimation, this is since vehicle motion information may still be determined using a basis of the second sensor data even when there is an irregularity of the first sensor data.

Optionally in some examples, including in at least one preferred example, the one or more common reference entities are arranged to comprise one or more parts of the vehicle, wherein the one or more parts of the vehicles comprises any one or more out of:
- one or more wheels and/or tires of the vehicle,
- a part and/or area of a vehicle body of the vehicle, and
- a part and/or area of a trailer attached to the vehicle.

A technical benefit may include improved vehicle motion estimation, this is since each reference entity of the one or more common reference entities may be measured using sensor data of different types, meaning that there is increase in reliability as if one of the first sensor data or second sensor data would be associated with low quality, e.g., due to sensor failure, the other respective sensor data is likely to still have high quality sensor data readings.

Optionally in some examples, including in at least one preferred example, the processing circuitry is configured to, based on the first sensor data, the second sensor data, or a combination thereof, determine vehicle motion information by being configured to determine any one or more of the following vehicle motion parameters as part of the vehicle motion information:
- a longitudinal speed of at least a portion of the vehicle,
- a yaw rate of the vehicle,
- one or more wheels speed of wheels of the vehicle,
- a lateral speed of at least a portion of the vehicle,
- a lateral acceleration of at least a portion of the vehicle,
- a longitudinal acceleration of at least a portion of the vehicle,
- a turning radius and/or an inverse turning radius of the vehicle, and
- a turning radius of the vehicle and/or an inverse thereof.

A technical benefit may include improved vehicle motion estimation, this is since any suitable parameter may be determined as part of the vehicle motion information.

According to a second aspect of the disclosure, a vehicle comprising a first set of sensors and a second set of sensors is provided. The first set of sensors and the second set of sensors respectively comprises sensors configured to measure sensor data for estimating a vehicle motion of one or more common reference entities. The first set of sensors and the second set of sensors comprises different sensor types. The vehicle comprises the computer system according to the first aspect.

The second aspect of the disclosure may seek to solve a problem of inaccurate and/or unavailable vehicle motion estimation due to low quality sensor data, e.g., due to sensor failures and/or inaccuracies in sensors used for the vehicle motion estimation. A technical benefit may include reliable and accurate vehicle motion estimation. Technical benefits may further be analogous to the benefits of the first aspect. It should further be noted that any examples or benefits of the first aspect apply to the second aspect and vice versa.

Optionally in some examples, including in at least one preferred example, the first set of sensors and/or the second set of sensors respectively comprises any one or more of:
- one or more wheel speed sensors for measuring wheel rotation,
- one or more Tire Monitoring System (TMS) sensors,
- one or more ground speed Radio Detection and Ranging (Radar) sensors,
- one or more accelerometers,
- one or more gyroscope sensors,
- one or more optical devices, and
- an Inertial Measurement Unit (IMU).

A technical benefit may include improved vehicle motion estimation, this is since any suitable sensors, e.g., as exemplified above may be used in a flexible manner to be part of the first set of sensors and the second set of sensors such that the different sets may form at reliable alternative to each other in case any sensor would fail or otherwise produce low quality sensor data.

Optionally in some examples, including in at least one preferred example, the first set of sensors comprises one or more wheel speed sensors for measuring wheel rotation, and preferably an IMU.

A technical benefit may include improved vehicle motion estimation, this is since the measured wheel rotation may provide accurate information of the wheel motion of the vehicle, which may, in particular with the combination of the IMU, form an accurate and reliable basis for determining the vehicle motion information.

Optionally in some examples, including in at least one preferred example, the second set of sensors comprises one or more TMS sensors, and preferably one or more ground speed Radar sensors.

A technical benefit may include improved vehicle motion estimation, this is since the one or more TMS sensors, in particular when also using the ground speed Radar sensors or any suitable alternative thereof, forms an accurate and reliable basis for determining the vehicle motion information, which further is different from the first set of sensors, such that if a failure is detected related to the first set of sensors, the second set of sensors are likely not affected.

According to a third aspect of the disclosure, a computer-implemented method for determining vehicle motion information of a vehicle is provided. The method comprises, by processing circuitry of a computer system, receiving first sensor data from a first set of sensors comprised in the vehicle. The method comprises, by the processing circuitry, receiving second sensor data from a second set of sensors comprised in the vehicle. The first sensor data and the second sensor data respectively comprises sensor data for estimating vehicle motion with respect to one or more common reference entities. The first sensor data comprises sensor data of a first type. The second sensor data comprises sensor data of a second type. The first type differs from the second type. The method comprises, by the processing circuitry, determining a first quality metric associated with the first sensor data. The method comprises, based on the first quality metric associated with the first sensor data, by the processing circuitry, determining whether to use the first sensor data, the second sensor data, or a combination thereof as a basis for determining vehicle motion information.

The third aspect of the disclosure may seek to solve a problem of inaccurate and/or unavailable vehicle motion estimation due to low quality sensor data, e.g., due to sensor failures and/or inaccuracies in sensors used for the vehicle motion estimation. A technical benefit may include reliable and accurate vehicle motion estimation. Technical benefits may further be analogous to the benefits of the first aspect and/or the second aspect. It should further be noted that any examples or benefits of the first aspect and/or the second aspect apply to the third aspect and vice versa.

Optionally in some examples, including in at least one preferred example, determining whether to use the first sensor data, the second sensor data, or a combination thereof as a basis for determining vehicle motion information comprises determining to use the second sensor data or a combination of the second sensor data and the first sensor data, in response to the first quality metric being outside a predetermined reference range of the first quality metric, preferably in response to the first quality metric being below a first threshold.

A technical benefit may include improved vehicle motion estimation, this is since when the first quality metric is outside the predetermined reference range of the first quality metric, the quality of the first sensor data may be low and the second sensor data can instead be used.

Optionally in some examples, including in at least one preferred example, determining a second quality metric associated with the second sensor data. In these examples, determining whether to use the first sensor data, the second sensor data, or a combination thereof as a basis for determining vehicle motion information, is further based on the second quality metric.

A technical benefit may include improved vehicle motion estimation, this is since the most suitable sensor data, i.e., the sensor data with the highest quality, or combination thereof may be determined based on the first quality metric and the second quality metric.

Optionally in some examples, including in at least one preferred example, determining whether to use the first sensor data, the second sensor data, or a combination thereof as a basis for determining vehicle motion information comprises determining to use the first sensor data or the second sensor data as a basis for determining vehicle motion information, based on a comparison of the first quality metric with the second quality metric.

A technical benefit may include improved vehicle motion estimation, this is since the respective sensor data with the highest quality metric may be determined to be used as a basis for determining vehicle motion information.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary flow chart of a method according to an example.
**FIG. 3** is an exemplary vehicle according to an example.
**FIG. 4** is an exemplary flow chart of a method according to an example.
**FIG. 5** is another view of **FIG**. **1****,** according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

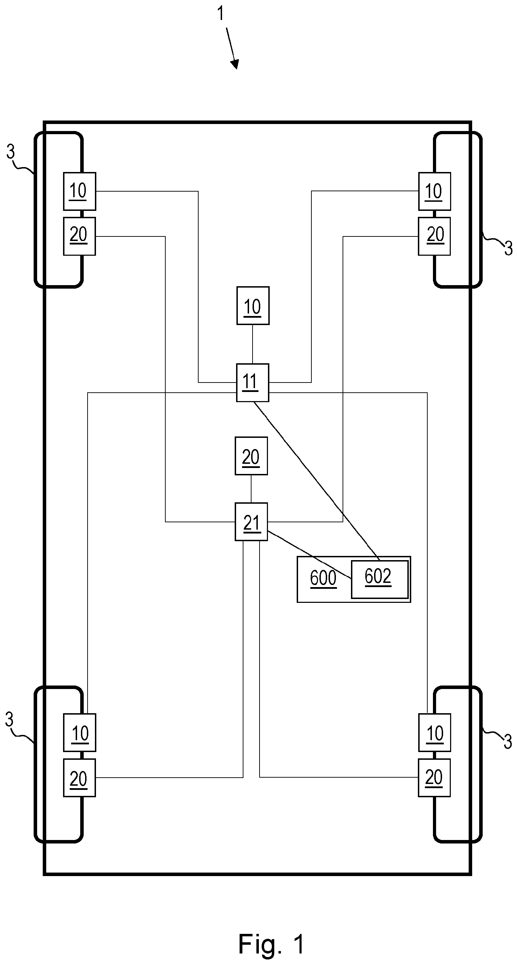

**FIG. 1** illustrates an exemplary vehicle 1 according to an example. The vehicle may comprise a set of wheels 3. The vehicle 1 comprises a first set of sensors 10 and a second set of sensors 20.

The first set of sensors 10 and the second set of sensors 20, respectively comprises sensors configured to measure sensor data for estimating a vehicle motion of one or more common reference entities.

In some examples, the first set of sensors 10 comprises a conventional configuration of sensors for measuring vehicle motion, while the second set of sensors 20 comprises a redundant set of sensors, which are of a different type from the first set of sensors 10, and which may have a different common cause of failure than the first set of sensors 10.

The one or more common reference entities may be an area, part, place, or subsystem which the respective different sensors of the first set of sensors 10 and the second set of sensors 20 are configured to measure. Typically, the one or more common reference entities may comprise the set of wheels 3 or tires thereof, using sensors for measuring wheel rotation or related measurements using different types of sensors, e.g., using wheels speed sensor for measuring rotation of the set of wheels in the first set of sensors 10 and correspondingly TMS sensors and/or ground speed radars for each wheel for measuring wheel speed as part of the second set of sensors 20.

Typically, the one or more common reference entities may comprise at least one part or area of the vehicle body of the vehicle 1, e.g., using an IMU in the first set of sensors 10 and using a ground speed radar sensor in the second set of sensors 20 for measuring a motion of the vehicle body.

The first set of sensors 10 and the second set of sensors 20 comprise different sensor types.

In some examples, the different sensors of the first set of sensors 10 and the second set of sensors 20 may each have any suitable set of sensors as long as they directly or indirectly, at least partly or fully, measure the same one or more common reference entity.

In some examples, the different sensors of the first set of sensors 10 and the second set of sensors 20 may have different modalities such that they do not share a same common cause of failure. This means that if the first set of sensors 10 comprises a sensor which fails, the second set of sensors 20 can immediately be used as a redundant source of sensor data for use as a basis for determining vehicle motion information.

The first set of sensors 10 and/or the second set of sensors 20 respectively comprises any one or more of:
- one or more wheel speed sensors for measuring wheel rotation, e.g., by any suitable sensor such as using a cogged and/or toothed wheel and a hall effect sensor,
- one or more TMS sensors, e.g., using a single axis gyroscope and/or an accelerometer, for measuring wheel speed of the set of wheels 3,
- one or more ground speed radar sensors, e.g., for measuring a vehicle speeds, rotation rates and/or angles relative to a ground surface,
- one or more accelerometers, e.g., for measuring accelerations of the vehicle body,
- one or more gyroscope sensors, e.g., one or more optical gyroscope sensors,
   e.g., for measuring high precision vehicle rotation rate and rotation angles ,
- one or more optical devices, e.g., a camera, lidar and/or optical speed sensor for measuring vehicle motion,
- one or more gyroscope sensors, e.g., for measuring vehicle angular/rotational rates, and
- an IMU e.g., for measuring acceleration, orientation, and/or angular rates.

In a first particular example, the first set of sensors 10 comprises one or more wheel speed sensors for measuring wheel rotation. The wheel speed sensors may respectively be a respective cogged or toothed wheel mounted in connection with a respective wheel of the set of wheels 3, e.g., adjacent to a brake of the respective wheel, and comprising or coupled with a hall effect sensor used for measuring the rotation of the respective wheel. In the first particular example the first set of sensors 10 may further comprise an IMU. The wheel speed sensors may in some examples be part of an antilock braking and traction control functionality of the vehicle 1, typically residing in a brake system of the vehicle 1.

In a second particular example, combinable with the first particular example, the second set of sensors 20 comprises one or more TMS sensors, e.g., for measuring wheel speed of the set of wheels 3. In the second particular example, the second set of sensors 20, preferably additionally comprise one or more ground speed Radar sensors, e.g., for measuring a speed of at least a portion of the vehicle body by scanning the ground surface.

In some examples, measuring wheels speed, using an accelerometer or gyroscope, e.g., as part of a TMS sensor, is performed by deriving the respective wheels speed based on respective measured angular rates.

When combining the first particular example and the second particular example, the first set of sensors 10 and the second set of sensors 20 have two common reference entities. A common reference entity is in these examples the set of wheels 3, measured both by the one or more wheel speed sensors of the first set of sensors 10 and the one or more TMS sensors of the second set of sensors 20.

The first set of sensors 10 may be controlled by, e.g., transmitting sensor data to, a first Electronic Control Unit (ECU) 11.

The second set of sensors 20 may be controlled by, e.g., transmitting sensor data to, a second ECU 21.

Methods and/or examples herein may be performed by a computer system 600 and/or a processing circuitry 602 therein.

As will be further discussed, the processing circuitry 602 is configured to determine whether to use the first sensor data, the second sensor data, or a combination thereof as a basis for determining vehicle motion information of the vehicle.

The computer system 600 and/or the processing circuitry 602 may be comprised in the vehicle 1, or comprised in a remote location such as in a server or part of a cloud service.

The computer system 600 and/or a processing circuitry 602 may be communicatively connected to any suitable entity of the vehicle 1, e.g., to any one or more of the first set of sensors 10, the second set of sensors 20, the first ECU 11, and the second ECU 12. In other words, the computer system 600 and/or the processing circuitry 602 may be able to control and/or communicate with any suitable entity of the vehicle 1.

The computer system 600 and/or the processing circuitry 602 may be, or be part of, or comprise an Electronic Control Unit (ECU) of the vehicle 1. The first ECU 11 and/or the second ECU 21 may be part of the computer system 600 and/or the processing circuitry 602.

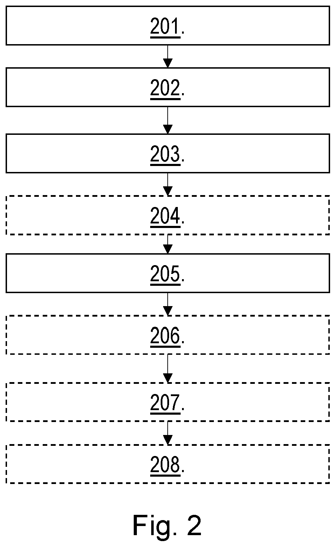

**FIG. 2** is an exemplary flow chart of a method according to an example.

A computer-implemented method for determining vehicle motion information of the vehicle 1 is provided. The method may be performed by the processing circuitry of the computer system 600. The method may comprise any one or more of the following actions, which actions may be performed in any suitable order.

### Action 201

The method comprises receiving first sensor data from the first set of sensors 10 comprised in the vehicle 1.

The first sensor data may be measurements of the first set of sensors 10, or derivations and/or any suitable processing needed for obtaining the first sensor data, transmitted continuously or periodically to the computer system 600.

The first sensor data comprises sensor data of a first type.

### Action 202

The method comprises receiving second sensor data from the second set of sensors 20 comprised in the vehicle 1.

The second sensor data may be measurements of the second set of sensors 10, or derivations and/or any suitable processing needed for obtaining the second sensor data, transmitted continuously or periodically to the computer system 600.

The first sensor data and the second sensor data respectively comprise sensor data for estimating vehicle motion with respect to one or more common reference entities. In other words, the first and second sensor data may be measurements of the same part, object, or subsystem, but measured with the use of different sensors.

The second sensor data comprises sensor data of a second type. The first type differs from the second type. In other words, the first set of sensors 10 and the second set of sensors 20 differs in type with regards to all, or at least some, sensors of the respective sets.

The one or more common reference entities are arranged to comprise one or more parts of the vehicle 1. The one or more parts of the vehicles comprises any one or more of:
- one or more wheels and/or tires of the vehicle 1, e.g., measured by ground radar, TMS sensors, or wheel speed sensors measuring the rotation of the respective wheel of the set of wheels 3,
- a part and/or area of a vehicle body of the vehicle 1, e.g., measured by ground surface radar, optical sensors, gyroscopes, IMUs, etc., and
- a part and/or area of a trailer attached to the vehicle 1, e.g., any suitable sensors but arranged for the attached trailer.

The one or more common reference entities may be any suitable part of the vehicle with associated degrees of freedom which may be measured and/or attached with sensors for measuring ground surface or reference points at a distance, e.g., to determine any suitable vehicle motion information as described later in Action 208.

### Action 203

The method comprises determining a first quality metric associated with the first sensor data.

The first quality metric may be based on any suitable heuristics or method for evaluating sensor data.

The first quality metric may indicate an overall quality of the first sensor data and/or may indicate respective quality of sensor data received from each sensor of the first set of sensors 10.

The first quality metric may comprise a first accuracy of the first sensor data. The first accuracy may be determined based on a reliability reported from the first set of sensors 10.

The first quality metric may comprise a first availability of the first sensor data. The first availability may be determined based on assessing the first sensor data and/or based on a message transmitted from the first set of sensors 10.

The first quality metric may comprise a first irregularity associated with the first set of sensors 10. The first irregularity may be determined based on assessing the first sensor data and/or based on a message transmitted from the first set of sensors 10.

As an example, determining the first irregularity associated with the first sensor data may comprise detecting the first irregularity by detecting any one or more of:
- a sensor fault of one or more sensors out of the first set of sensors 10,
- an absence of expected sensor data out of the first sensor data, e.g., there is no reported sensor data for a set period of time or the frequency of sensor data is lower than a threshold frequency,
- that the first sensor data comprises sensor data indicative of values outside an operational driving domain of the vehicle 1, e.g., the sensor data is outside a set interval and may indicate anomalies and for wheel speed sensor data it may indicate excessive slip of a wheel, and
- that the first sensor data comprises sensor data indicative of at least two measurements obtained during a time period, and wherein a rate of change of the at least two measurements for the time period is above a rate threshold, e.g., there are rapid rises or spikes in measurements in the first sensor data.

Determining the first quality metric may comprise comparing the first sensor data with the second sensor data, i.e., by verifying the first sensor data with the second sensor data. In some examples, the first quality metric may be determined based on a relative quality of a comparison of the first sensor data with the second sensor data. This means that the first quality metric may indicate whether or not the first sensor data is suitable as a basis for determining vehicle motion information, or alternatively if the second sensor data is more suitable as a basis for determining vehicle motion information.

Determining the first quality metric may comprise determining the first quality metric based on a detected driving condition, i.e., different sensor types may have different quality of different driving conditions, e.g., if detected that all wheels of the set of wheels 3 are slipping.

Determining the first quality metric may comprise determining the first quality metric based on an obtained, temperature e.g., measured using a temperature sensor, associated with the first set of sensors 10, e.g., since some sensors such as wheel speed sensors may be associated with reduced accuracy with increased temperature.

### Action 204

In some examples, the method comprises determining a second quality metric associated with the second sensor data.

The second quality metric may be based on any suitable heuristics or method for evaluating sensor data.

The second quality metric may indicate an overall quality of the second sensor data and/or may indicate respective quality of sensor data received from each sensor of the second set of sensors 20.

The second quality metric may comprise a second accuracy of the second sensor data. The second accuracy may be determined based on a reliability reported from the second set of sensors 20.

The second quality metric may comprise a second availability of the second sensor data. The second availability may be determined based on assessing the second sensor data and/or based on a message transmitted from the second set of sensors 20.

The second quality metric may comprise a second irregularity associated with the second set of sensors 20. The second irregularity may be determined based on assessing the second sensor data and/or based on a message transmitted from the second set of sensors 20.

As an example, determining the second irregularity associated with the second sensor data may comprise detecting the second irregularity by detecting any one or more of:
- a sensor fault of one or more sensors out of the second set of sensors 20,
- an absence of expected sensor data out of the second sensor data, e.g., there is no reported sensor data for a set period of time or the frequency of sensor data is lower than a threshold frequency,
- that the second sensor data comprises sensor data indicative of values outside an operational driving domain of the vehicle 1,
- that the second sensor data comprises sensor data indicative of at least two measurements obtained during a time period, and wherein a rate of change of the at least two measurements for the time period is above a rate threshold, e.g., there are rapid rises or spikes in measurements in the second sensor data.

Determining the second quality metric may comprise comparing the first sensor data with the second sensor data, i.e., by verifying the second sensor data with the first sensor data. In some examples the second quality metric may be determined based on a relative quality of a comparison of the first sensor data with the second sensor data. This means that the first quality metric and the second quality metric may have a relationship indicating which set of sensors is more suitable for use data as a basis for determining vehicle motion information.

Determining the second quality metric may comprise determining the second quality metric based on a detected driving condition, i.e., different sensor types may have different quality of different driving conditions, e.g., if all wheels of the set of wheels 3 are slipping.

Determining the second quality metric may comprise determining the second quality metric based on an obtained, temperature e.g., measured using a temperature sensor, associated with the second set of sensors 12, e.g., since some sensors such as wheel speed sensors may be associated with reduced accuracy with increased temperature.

### Action 205

The method comprises based on the first quality metric associated with the first sensor data, determining whether to use the first sensor data, the second sensor data, or a combination thereof as a basis for determining vehicle motion information.

For example, when it is determined that the first quality metric indicates that the first sensor data is unsuitable for determining vehicle motion information, at least on its own, it may be determined to use the second sensor data, or a combination of the second sensor data and the first sensor data as a basis for determining vehicle motion information.

In some examples, determining whether to use the first sensor data, the second sensor data, or a combination thereof as a basis for determining vehicle motion information comprises determining to use the second sensor data or a combination of the second sensor data and the first sensor data, in response to the first quality metric being outside a predetermined reference range of for the first quality metric, preferably in response to the first quality metric being below a first threshold.

In other words, since the first sensor data is of too poor quality, it may be determined to switch to using the second sensor data as a basis for determining vehicle motion information. Since the first sensor data and the second sensor data are of differing types, i.e., measured by different types of sensors, it may be assumed that even if the first quality metric indicates low accuracy or irregularities of the first sensors data, the second sensor data should not be affected by these problems as it is measured by an independent type of sensors.

In some examples, determining whether to use the first sensor data, the second sensor data, or a combination thereof as a basis for determining vehicle motion information, is based on the second quality metric, e.g., as determined in action 204.

In some examples, determining whether to use the first sensor data, the second sensor data, or a combination thereof as a basis for determining vehicle motion information, is based on a comparison of the first quality metric with the second quality metric. For example, it may be possible to select the sensor data with the quality metric indicating the highest quality.

In some examples, determining whether to use the first sensor data, the second sensor data, or a combination thereof as a basis for determining vehicle motion information, may be made based on a predefined logic. The logic may determine which of the first set of sensors 10 or second set of sensors 20 that should be in use. During an normal or initial condition of the vehicle 1, the first set of sensors 10 may be used as a default, but in case faults, outliers, or poor accuracy indicated by the first quality metric, thereby indicating that the first set of sensors 10 are not working as expected, it may be determined to use the second sensor data, or a combination of the second sensor data and the first sensor data.

In some examples herein, the first set of sensors 10 and/or the second set of sensors 20 may send messages about their respective uncertainties, e.g., as part of determining the first quality metric and/or the second quality metric in actions 203-204, to an arbitration logic that controls a switch. The switch may determine whether to use the first sensor data, or the second sensor data.

In some examples herein, determining to use a combination of first sensor data and second sensor data may be performed in response to detecting that the first quality metric indicates that a first particular sensor of the first set of sensors 10 is unsuitable for motion estimation, e.g., the quality is low or associated with low accuracy or irregularity, and wherein the second quality metric indicates that a second particular sensor of the second set of sensors 20 is suitable for motion estimation, e.g., the quality is high or is associated with high accuracy or at least not with irregularities. In these examples, the first particular sensor and the second particular sensor may measure corresponding measurements, e.g., wheel speed, but using different sensor types.

In some examples herein, one option is to use different sensors under different driving conditions based on determining that a particular sensor set may have better performance under a certain driving condition. For example when all wheels are slipping, it may be good to switch to the sensor set containing the ground speed radar for reference speed measurement. In these scenarios, the first quality metric and/or the second quality metric may have been determined based on a detected driving condition.

### Action 206

In some examples, the method comprises, based on the first quality metric and the second quality metric, detect that the first sensor data and the second sensor data is unsuitable for use as a basis for determining vehicle motion information.

For example, the first sensor data and the second sensor data may both have respective quality metrics below a threshold. As another example, the first sensor data and the second sensor data may both comprise irregularities such as absence of sensor data and/or low accuracy.

### Action 207

In some examples, the method comprises, in response to the detection that the first sensor data and the second sensor data is unsuitable for use as a basis for determining vehicle motion information, e.g., as in Action 206, triggering the vehicle 1 to enter a safe state.

The safe state may be any suitable action, in particular, any vehicle state that does not need vehicle motion information.

Triggering the vehicle 1 to enter the safe state may comprise triggering the vehicle 1 to initiate a controlled stop of the vehicle 1.

Triggering the vehicle 1 to enter the safe state may comprise triggering the vehicle 1 to inactivate any operation or mode in utilizing vehicle motion information.

### Action 208

In some examples, the method comprises determining vehicle motion information based on the first sensor data, the second sensor data, or a combination thereof, as determined in action 205.

The vehicle motion information may further be used in any suitable manner, e.g., for any one or more functions such as motion prediction, wheel slip control, understeer and rollover prevention, stability or safety procedures, and automated driving.

In some examples, based on the first sensor data, the second sensor data, or a combination thereof, determining vehicle motion information may comprise determining any one or more out of the following vehicle motion parameters as part of the vehicle motion information:
- a longitudinal speed of at least a portion of the vehicle 1,
- a yaw rate of the vehicle 1,
- one or more wheels speed of wheels of the vehicle 1,
- a lateral speed of at least a portion of the vehicle 1,
- a lateral acceleration of at least a portion of the vehicle 1,
- a longitudinal acceleration of at least a portion of the vehicle 1, and
- a turning radius and/or an inverse turning radius of the vehicle 1.

In some examples, any one or more of the above vehicle motion parameters may be determined based on the first set of sensors 10 or the second set of sensors 20. In other words, the first set of sensors 10 and the second set of sensors 20 may have the same capability of determining vehicle motion parameters, even though they are of different sensor types.

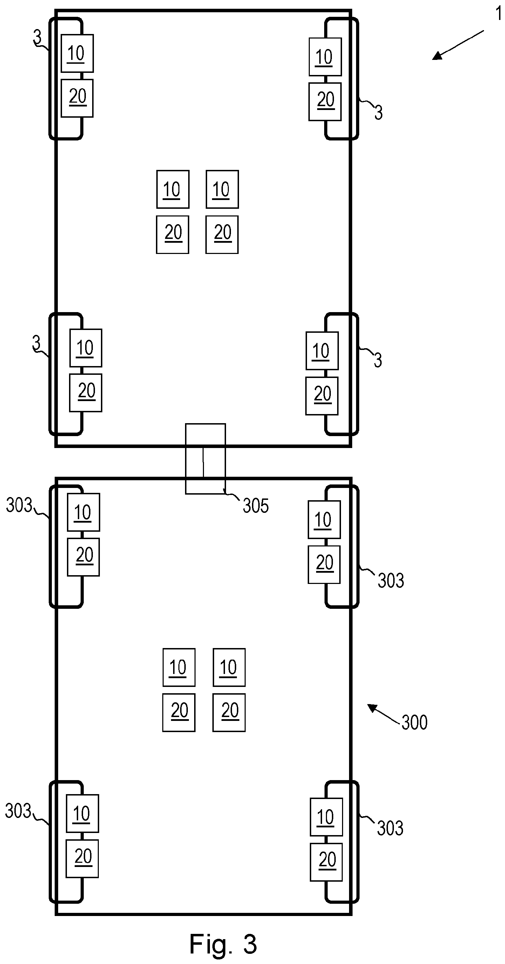

**FIG. 3** is an example when the vehicle 1 is attached to a trailer 300.

In this example, the trailer 300 comprises a set of trailer wheels 303.

In this example, the first set of sensors 10 and the second set of sensors 20 may comprise the same sensors as previously described, e.g., with respect to FIGS 1-2. Furthermore, the first set of sensors 10 and/or the second set of sensors 20 may respectively comprise sensors attached to the trailer 300, for measuring a motion of the trailer body and/or the set of trailer wheels 303.

In some examples, an articulation angle between the vehicle 1 and the trailer 300 may be measured by an articulation angle sensor 305. The articulation angle sensor 305 may be any suitable sensor for measuring an angle between the vehicle 1 and the trailer 300, e.g., a kingpin sensor, a camera, at least two distance sensors, etc. The articulation angle sensor 305 may be part of the first set of sensors 10 and/or the second set of sensors 20.

The example of FIG. 3 may further be expanded to multiple trailers or any other suitable attached equipment to the vehicle 1.

### Further variations and examples

In some examples herein, the second set of sensor 20 may preferably comprise a ground radar for measuring a vehicle body speed, i.e., being attached to the vehicle body of the vehicle 1 and configured to use beams directed towards the ground surface for measuring a motion of the vehicle body. The ground radar may be a compound unit with multiple radar beams that allow for longitudinal, lateral and yaw rate to be measured directly from the unit.

In some examples herein, the second set of sensor 20 may preferably comprise one or more TMS sensors for measuring wheel speed of the set of wheels 3. Alternatively, the TMS sensors in the second set of sensors 20 may be replaced with some other sensors with a different modality compared to wheel speed sensors of the first set of sensors 10, for example a ground speed radar at each wheel end of the set of wheels 3 to measure wheel speed over a respective ground surface. A further alternative may be for the second set of sensors 20 to comprise an accelerometer inside the wheel/tire of the set of wheels 3 to measure the wheel speed.

In some examples herein, a combination of independent ground speed radars, optical gyroscope, i.e., for yaw rate, and TMS sensors or other sensors of different modalities than the ones used in the first set of sensors 10 may be used in any examples herein..

The estimates from the first set of sensors 10 and the second set of sensors 20 may be kept totally separate so that the second set of sensors 20 may be used as a fallback in case the first set of sensors 10 fails or alternatively, they may to cross verify the two set of sensors performance or quality for improved fault detection or as yet another alternative, they can be merged, i.e., used in combination, to improve the accuracy of the estimates provided by the two systems.

In some examples herein, if the first set of sensors 10 comprises a wheel speed sensor reporting zero speed, while other wheel speed sensors, e.g., of the first set of sensors 10 or the second set of sensors 20, reports a high speed, the first quality metric may be determined to be low, e.g., lower than a threshold and/or lower/worse than the second quality metric, such that it is determined to use the second sensor data as a basis for determining vehicle motion information.

In some examples herein, if the first set of sensors 10 comprises a wheel speed sensor reporting a wheel speed indicating that the vehicle 1 is travelling at a constant speed whereas an accelerometer of the first set of sensors 10 indicates a max or min value e.g., 10m/s^2, which is implausible when the vehicle 1 is a truck or other heavy-duty vehicle, the first quality metric may be determined to be low due to the contradictory results from the wheel speed sensor and the accelerometer, respectively, e.g., lower than a threshold and/or lower/worse than the second quality metric, such that it is determined to use the second sensor data as a basis for determining vehicle motion information.

In some examples herein, if estimated that all wheels of the set of wheels 3 are slipping, e.g., by measurements of an Anti-lock Braking System (ABS) and/or traction control flags, e.g., obtained from an ECU or sensor, the first quality metric and the second quality metric may be determined based on the respective sensors suitability for measuring entities during wheel slip. For example, if the second set of sensors 20 comprises a ground speed radar which can measure reliable vehicle reference speed over a ground surface, the second quality metric may be determined to be high, e.g., higher than a threshold and/or higher/better than the second quality metric, such that it is determined to use the second sensor data as a basis for determining vehicle motion information.

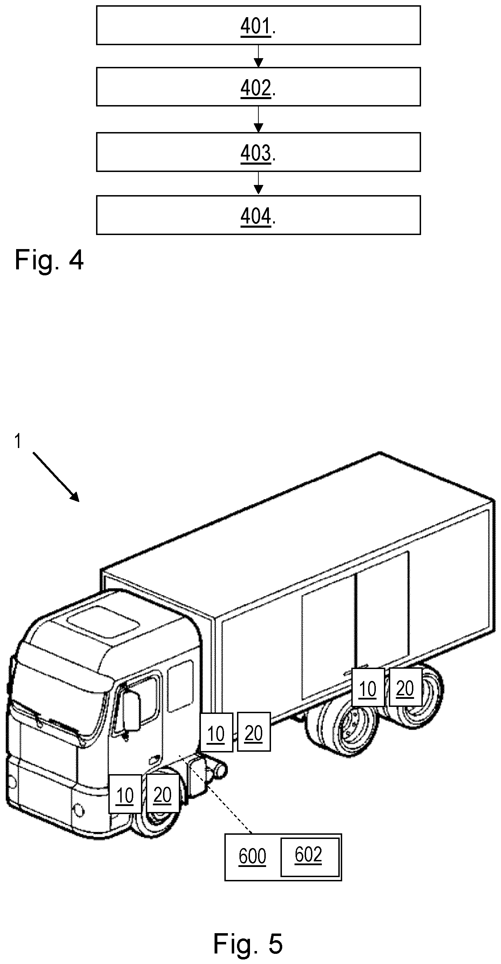

**FIG. 4** is an exemplary flow chart of a method according to an example.

A computer-implemented method for determining vehicle motion information of the vehicle 1 is provided. Actions 401-404 may be combined with the actions 201-207 above, and/or with any other example herein, in any suitable manner.

**Action 401.** The method comprises, by the processing circuitry 602 of the computer system 600, receiving first sensor data from a first set of sensors 10 comprised in the vehicle 1.

**Action 402.** The method comprises, by the processing circuitry 602, receiving second sensor data from a second set of sensors 20 comprised in the vehicle 1.

The first sensor data and the second sensor data respectively comprises sensor data for estimating vehicle motion with respect to one or more common reference entities.

The first sensor data comprises sensor data of a first type.

The second sensor data comprises sensor data of a second type.

The first type differs from the second type.

**Action 403.** The method comprises, by the processing circuitry 602, determining a first quality metric associated with the first sensor data.

**Action 404.** The method comprises, by the processing circuitry 602, determining whether to use the first sensor data, the second sensor data, or a combination thereof as a basis for determining vehicle motion information based on the first quality metric associated with the first sensor data.

**FIG. 5** is another view of **FIG. 1****,** according to an example.

The computer system 600 comprising the processing circuitry 602 is configured to determine vehicle motion information of the vehicle 1.

The processing circuitry 602 is configured to receive first sensor data from a first set of sensors 10 comprised in the vehicle 1.

The processing circuitry 602 is configured to receive second sensor data from a second set of sensors 20 comprised in the vehicle 1.

The first sensor data and the second sensor data respectively comprises sensor data for estimating vehicle motion with respect to one or more common reference entities.

The first sensor data comprises sensor data of a first type.

The second sensor data comprises sensor data of a second type.

The first type differs from the second type.

The processing circuitry 602 is configured to determine a first quality metric associated with the first sensor data.

The processing circuitry 602 is configured to determine whether to use the first sensor data, the second sensor data, or a combination thereof as a basis for determining said vehicle motion information based on the first quality metric associated with the first sensor data.

The processing circuitry may further be configured to perform any one or more out of the actions 201-207, 401-404 as discussed above. Further examples of configurations of the processing circuitry follow bellow.

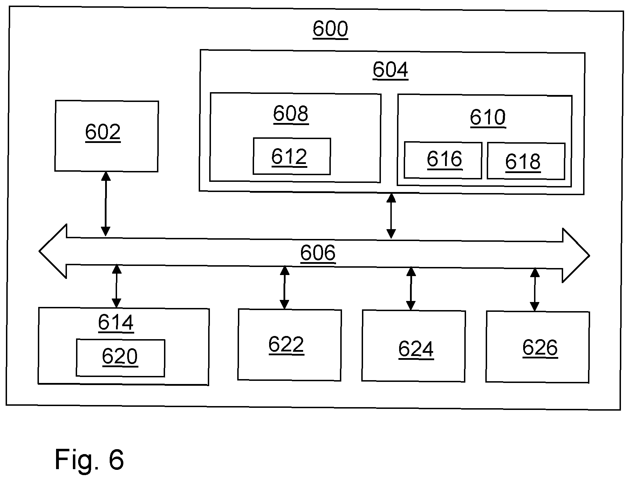

**FIG. 6** is a schematic diagram of the computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system 600 may include the processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

A number of Examples follow below, which Examples can be combined in any suitable manner with other Examples provided herein.

Example 1. A computer system 600 comprising processing circuitry 602 configured to determine vehicle motion information of a vehicle 1, wherein the processing circuitry 602 is configured to :
- receive first sensor data from a first set of sensors 10 comprised in the vehicle 1,
- receive second sensor data from a second set of sensors 20 comprised in the vehicle 1,
   wherein the first sensor data and the second sensor data respectively comprises sensor data for estimating vehicle motion with respect to one or more common reference entities, and
   wherein the first sensor data comprises sensor data of a first type, and wherein the second sensor data comprises sensor data of a second type, and wherein the first type differs from the second type,
- determine a first quality metric associated with the first sensor data,
- based on the first quality metric associated with the first sensor data, determine whether to use the first sensor data, the second sensor data, or a combination thereof as a basis for determining said vehicle motion information.

Example 2. A computer system 600 according to Example 1, wherein the processing circuitry 602 is configured to use the second sensor data or a combination of the second sensor data and the first sensor data as a basis for determining said vehicle motion information in response to the first quality metric being outside a predetermined reference range of the first quality metric, preferably in response to the first quality metric being below a first threshold.

Example 3. A computer system 600 according to any one of Examples 1-2, wherein the processing circuitry 602 is configured to:
determine a second quality metric associated with the second sensor data, and
use the first sensor data, the second sensor data, or a combination thereof as a basis for determining vehicle motion information, further based on the second quality metric.

Example 4. A computer system 600 according to Example 3, wherein the processing circuitry 602 is configured to use the first sensor data or the second sensor data as a basis for determining vehicle motion information, based on a comparison of the first quality metric with the second quality metric.

Example 5. A computer system 600 according to any of Examples 3 or 4, wherein the processing circuitry 602 is configured to:
- based on the first quality metric and the second quality metric, detect that the first sensor data and the second sensor data is unsuitable for use as a basis for determining vehicle motion information, and in response to said detection, trigger the vehicle 1 to enter a safe state.

Example 6. A computer system 600 according to any one of Examples 1-5, wherein the first quality metric comprises a first accuracy of the first sensor data.

Example 7. A computer system 600 according to any one of Examples 1-6, wherein the first quality metric comprises a first irregularity associated with the first set of sensors 10.

Example 8. A computer system 600 according to Example 7, wherein the processing circuitry 602 is configured to detect the first irregularity by being configured to detect any one or more of:
- a sensor fault of one or more sensors out of the first set of sensors 10,
- an absence of expected sensor data out of the first sensor data,
- that the first sensor data comprises sensor data indicative of values outside an operational driving domain of the vehicle 1, and
- that the first sensor data comprises sensor data indicative of at least two measurements obtained during a time period, and wherein a rate of change of the at least two measurements for the time period is above a rate threshold.

Example 9. A computer system 600 according to any one of Examples 1-8, wherein the one or more common reference entities are arranged to comprise one or more parts of the vehicle 1, wherein the one or more parts of the vehicles comprises any one or more out of:
- one or more wheels and/or tires of the vehicle 1,
- a part and/or area of a vehicle body of the vehicle 1, and
- a part and/or area of a trailer 300 attached to the vehicle 1.

Example 10. A computer system 600 according to any one of Examples 1-9, wherein the processing circuitry 602 is configured to, based on the first sensor data, the second sensor data, or a combination thereof, determine vehicle motion information by being configured to determine any one or more out of the following vehicle motion parameters as part of the vehicle motion information:
a longitudinal speed of at least a portion of the vehicle 1,
a yaw rate of the vehicle 1,
one or more wheels speed of wheels of the vehicle 1,
a lateral speed of at least a portion of the vehicle 1,
a lateral acceleration of at least a portion of the vehicle 1,
a longitudinal acceleration of at least a portion of the vehicle 1,
a turning radius and/or an inverse turning radius of the vehicle 1, and
a turning radius of the vehicle 1 and/or an inverse thereof.

Example 11. A vehicle 1 comprising a first set of sensors 10 and a second set of sensors 20, wherein the first set of sensors 10 and the second set of sensors 20 respectively comprises sensors configured to measure sensor data for estimating a vehicle motion of one or more common reference entities, wherein said first set of sensors 10 and said second set of sensors 20 comprises different sensor types, and wherein the vehicle 1 comprises the computer system 600 of any of Examples 1-10.

Example 12. The vehicle 1 of Example 11, wherein the first set of sensors 10 and/or the second set of sensors 20 respectively comprises any one or more out of:
- one or more wheel speed sensors for measuring wheel rotation,
- one or more Tire Monitoring System, TMS, sensors,
- one or more ground speed Radio Detection and Ranging, Radar, sensors,
- one or more accelerometers,
- one or more gyroscope sensors, e.g., one or more optical gyroscope sensors,
- one or more optical devices,
- an Inertial Measurement Unit, IMU.

Example 13. The vehicle 1 of any one of Examples 11-12, wherein the first set of sensors 10 comprises one or more wheel speed sensors for measuring wheel rotation, and preferably an IMU.

Example 14. The vehicle 1 of any one of Examples 11-13, wherein the second set of sensors 20 comprises one or more TMS sensors, and preferably one or more ground speed Radar sensors.

Example 15. A computer-implemented method for determining vehicle motion information of a vehicle 1, the method comprising:
- by processing circuitry 602 of a computer system 600, receiving 201, 401 first sensor data from a first set of sensors 10 comprised in the vehicle 1,
- by the processing circuitry 602, receiving 202, 402 second sensor data from a second set of sensors 20 comprised in the vehicle 1,
   wherein the first sensor data and the second sensor data respectively comprises sensor data for estimating vehicle motion with respect to one or more common reference entities, and
   wherein the first sensor data comprises sensor data of a first type, and wherein the second sensor data comprises sensor data of a second type, and wherein the first type differs from the second type,
- by the processing circuitry 602, determining a 203, 403 first quality metric associated with the first sensor data,
- based on the first quality metric associated with the first sensor data, by the processing circuitry 602, determining 205, 404 whether to use the first sensor data, the second sensor data, or a combination thereof as a basis for determining vehicle motion information.

Example 16. A computer-implemented method according to Example 15, wherein determining 205 whether to use the first sensor data, the second sensor data, or a combination thereof as a basis for determining vehicle motion information comprises determining to use the second sensor data or a combination of the second sensor data and the first sensor data, in response to the first quality metric being outside a predetermined reference range of the first quality metric, preferably in response to the first quality metric being below a first threshold.

Example 17. A computer-implemented method according to any one of Examples 15-16, further comprising:
- by the processing circuitry 602, determining 204 a second quality metric associated with the second sensor data, and wherein determining 205 whether to use the first sensor data, the second sensor data, or a combination thereof as a basis for determining vehicle motion information, is further based on the second quality metric.

Example 18. A computer-implemented method according to Example 17, wherein determining whether to use the first sensor data, the second sensor data, or a combination thereof as a basis for determining vehicle motion information comprises determining
to use the first sensor data or the second sensor data as a basis for determining vehicle motion information, based on a comparison of the first quality metric with the second quality metric.

Example 19. A computer program product comprising program code for performing, when executed by the processing circuitry 602, the method of any of Examples 13-18.

Example 20. A non-transitory computer-readable storage medium comprising instructions, which when executed by the processing circuitry 602, cause the processing circuitry 602 to perform the method of any of Examples 13-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to determine vehicle motion information of a vehicle (1),
wherein the processing circuitry (602) is configured to:
- receive first sensor data from a first set of sensors (10) comprised in the vehicle (1),
- receive second sensor data from a second set of sensors (20) comprised in the vehicle (1),
∘ wherein the first sensor data and the second sensor data respectively comprises sensor data for estimating vehicle motion with respect to one or more common reference entities, and
∘ wherein the first sensor data comprises sensor data of a first type, and wherein the second sensor data comprises sensor data of a second type, and wherein the first type differs from the second type,
- determine a first quality metric associated with the first sensor data,
- based on the first quality metric associated with the first sensor data, determine whether to use the first sensor data, the second sensor data, or a combination thereof as a basis for determining said vehicle motion information.

2. A computer system (600) according to claim 1, wherein the processing circuitry (602) is configured to use the second sensor data or a combination of the second sensor data and the first sensor data as a basis for determining said vehicle motion information in response to the first quality metric being outside a predetermined reference range of the first quality metric, preferably in response to the first quality metric being below a first threshold.

3. A computer system (600) according to any one of claims 1-2, wherein the processing circuitry (602) is configured to:
determine a second quality metric associated with the second sensor data, and
use the first sensor data, the second sensor data, or a combination thereof as a basis for determining vehicle motion information, further based on the second quality metric.

4. A computer system (600) according to claim 3, wherein the processing circuitry (602) is configured to use the first sensor data or the second sensor data as a basis for determining vehicle motion information, based on a comparison of the first quality metric with the second quality metric.

5. A computer system (600) according to any of claims 3 or 4, wherein the processing circuitry (602) is configured to:
- based on the first quality metric and the second quality metric, detect that the first sensor data and the second sensor data is unsuitable for use as a basis for determining vehicle motion information, and in response to said detection, trigger the vehicle (1) to enter a safe state.

6. A computer system (600) according to any one of claims 1-5, wherein the first quality metric comprises any one or more out of:
- a first accuracy of the first sensor data, and
- a first irregularity associated with the first set of sensors (10).

7. A computer system (600) according to claim 6, wherein the processing circuitry (602) is configured to detect the first irregularity by being configured to detect any one or more of:
- a sensor fault of one or more sensors out of the first set of sensors (10),
- an absence of expected sensor data out of the first sensor data,
- that the first sensor data comprises sensor data indicative of values outside an operational driving domain of the vehicle (1), and
- that the first sensor data comprises sensor data indicative of at least two measurements obtained during a time period, and wherein a rate of change of the at least two measurements for the time period is above a rate threshold.

8. A computer system (600) according to any one of claims 1-7, wherein the one or more common reference entities are arranged to comprise one or more parts of the vehicle (1), wherein the one or more parts of the vehicles comprises any one or more out of:
- one or more wheels and/or tires of the vehicle (1),
- a part and/or area of a vehicle body of the vehicle (1), and
- a part and/or area of a trailer (300) attached to the vehicle (1).

9. A computer system (600) according to any one of claims 1-8, wherein the processing circuitry (602) is configured to, based on the first sensor data, the second sensor data, or a combination thereof, determine vehicle motion information by being configured to determine any one or more out of the following vehicle motion parameters as part of the vehicle motion information:
- a longitudinal speed of at least a portion of the vehicle (1),
- a yaw rate of the vehicle (1),
- one or more wheels speed of wheels of the vehicle (1),
- a lateral speed of at least a portion of the vehicle (1),
- a lateral acceleration of at least a portion of the vehicle (1),
- a longitudinal acceleration of at least a portion of the vehicle (1), and
- a turning radius and/or an inverse turning radius of the vehicle (1).

10. A vehicle (1) comprising a first set of sensors (10) and a second set of sensors (20), wherein the first set of sensors (10) and the second set of sensors (20) respectively comprises sensors configured to measure sensor data for estimating a vehicle motion of one or more common reference entities, wherein said first set of sensors (10) and said second set of sensors (20) comprises different sensor types, and wherein the vehicle (1) comprises the computer system (600) of any of claims 1-9.

11. The vehicle (1) of claim 10, wherein the first set of sensors (10) and/or the second set of sensors (20) respectively comprises any one or more out of:
- one or more wheel speed sensors for measuring wheel rotation,
- one or more Tire Monitoring System, TMS, sensors,
- one or more ground speed Radio Detection and Ranging, Radar, sensors,
- one or more accelerometers,
- one or more gyroscope sensors,
- one or more optical devices, and
- an Inertial Measurement Unit, IMU.

12. The vehicle (1) of claim 11, wherein the first set of sensors (10) comprises one or more wheel speed sensors for measuring wheel rotation, and preferably an IMU.

13. A computer-implemented method for determining vehicle motion information of a vehicle (1), the method comprising:
- by processing circuitry (602) of a computer system (600), receiving (201, 401) first sensor data from a first set of sensors (10) comprised in the vehicle (1),
- by the processing circuitry (602), receiving (202, 402) second sensor data from a second set of sensors (20) comprised in the vehicle (1),
wherein the first sensor data and the second sensor data respectively comprises sensor data for estimating vehicle motion with respect to one or more common reference entities, and wherein the first sensor data comprises sensor data of a first type, and wherein the second sensor data comprises sensor data of a second type, and wherein the first type differs from the second type,
- by the processing circuitry (602), determining a (203, 403) first quality metric associated with the first sensor data,
- based on the first quality metric associated with the first sensor data, by the processing circuitry (602), determining (205, 404) whether to use the first sensor data, the second sensor data, or a combination thereof as a basis for determining vehicle motion information.

14. A computer program product comprising program code for performing, when executed by the processing circuitry (602), the method of claim 13.

15. A non-transitory computer-readable storage medium comprising instructions, which when executed by the processing circuitry (602), cause the processing circuitry (602) to perform the method of claim 13.
